# EUROPEAN PATENT SPECIFICATION

(11) **EP 0 347 063 B1**
(45) Date of publication and mention of the grant of the patent: **09.08.1995**
(21) Application number: 89305477.5
(22) Date of filing: 31.05.1989
(51) Int. Cl.: G02F 1/1335, G02B 1/04

(54) **Liquid crystal display device and plastic optical phase sheet**
Flüssigkristallanzeigevorrichtung und Kunststoffilm mit optischer Phase
Dispositif d'affichage à cristaux liquides avec film en matière plastique à phase optique

(30) Priority: 02.06.1988 JP 136105/88; 13.01.1989 JP 6422/89
(43) Date of publication of application: 20.12.1989
(73) Proprietor: FUJITSU LIMITED, Kawasaki-shi, Kanagawa 211 (JP)
(72) Inventor: Tanaka, Akira, Kawasaki-shi Kanagawa 213 (JP); Takahashi, Eietsu, Yokohama-shi Kanagawa 245 (JP); Sawada, Hisashi, Inagi-shi Tokyo 206 (JP); Nagatani, Shinpei, Midori-ku Yokohama-shi Kanagawa 227 (JP); Sato, Masuji, Kawasaki-shi Kanagawa 213 (JP); Kojima, Yuji, Chigasaki-shi Kanagawa 253 (JP); Ohashi, Makoto, Sagamihara-shi Kanagawa 228 (JP)
(74) Representative: Lawrence, Peter Robin Broughton

(56) References cited:
- EP-A- 0 186 999
- PATENT ABSTRACTS OF JAPAN, vol. 10, no. 252 (C-369)[2308], 29th August 1986 ; & JP-A-61 81 449
- PATENT ABSTRACTS OF JAPAN, vol. 10, no. 252 (C-369)[2308], 29th August 1986 ; & JP-A-61 78 857
- PATENT ABSTRACTS OF JAPAN, vol. 10, no. 23 (C-325)[2080], 29th January 1986 ; & JP-A-60 177 064
- "International Handbook of Liquid Crystal Displays 1975-76", By M. Tobias; Ovum Ltd, London, 1975.

## Description

The present invention relates to a liquid crystal display device comprising a plastic optical phase compensating sheet. More particularly, the present invention relates to a liquid crystal display device comprising an optical phase compensating sheet comprising a polymer blend composed of polyvinylidene fluoride and polymethyl methacrylate.

With the development of optical communications using a laser as the light source, various optical control elements used for this optical communication, such as a light switch and a light modulator, have been improved.

An optical control element such as a phase plate is widely used not only in the field of optical communications but also for a liquid crystal display element or a display device such as a plasma display device.

For example, in the case of a liquid crystal display device adopting the simple matrix system, since the electro-optical characteristics are sharp, the display is obtained by using an STN (super twisted nematic) liquid crystal, but since the liquid crystal shows an optical anisotropy, the display must be in color and a black-and-white display cannot be obtained.

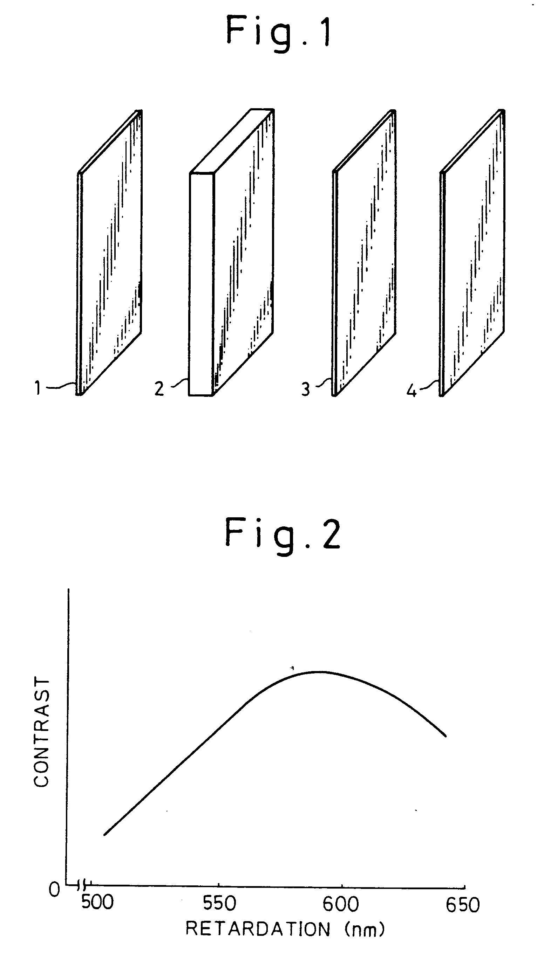

More specifically, as shown in Fig. 1, if a circularly polarized light is converted to a linearly polarized light through a polarizing plate 1 and the linearly polarized light is made incident on a liquid crystal cell 2, since the liquid crystal has an optical anisotropy, the light is emitted in the form of an elliptically polarized light from the liquid crystal cell 2. The ellipticity of the elliptically polarized light depends on the wavelength.

Accordingly, this emitted light is made incident on an optical phase plate 3 (compensating film) and the operation performed on the incident light by the liquid crystal cell is reversed to convert the light to the original linearly polarised light, and this linearly polarised light is emitted through an analyser 4 to display of an image.

"International Handbook of Liquid Crystal Displays 1975 - 76" by Martin Tobias (Ovum Limited, London, England, 1975) at pages 58 to 59 describes a device of this general arrangement.

The optical phase compensating plate has heretofore been constructed by using an anisotropic optical crystal such as acidic potassium dihydrogenphosphate (KH₂PO₄; called "KDP" for short) or lithium niobate (LiNbO₃).

The formation of an inorganic element by a growth of the crystal of this material, and cutting and polishing the grown crystal, requires much labor and time, and the element is very expensive. Accordingly, to realise a black-and-white display by using a liquid crystal and a wide-spread use of this display system, it is necessary to lower the cost of the optical phase plate. Moreover, this conventional technique is disadvantageous in that it is difficult to manufacture an element having a large area.

Furthermore, a black-and-white panel for obtaining a black-and-white display by using two piled liquid crystal cells is heavy, thick and expensive, and if the reflection type is adopted, the display is too dark.

Under the above circumstances, the thickness and weight of the compensating plate must be reduced, the cost must be lowered, and a bright display made possible.

Since some polymeric materials (for example, polycarbonate) have an optical anisotropy, attempts have been made to manufacture a practical optical phase plate by using such a polymeric material, but an optical phase plate of polymeric material having a practical utility has not been realised.

Publication EP-A-0186999 discloses a non-linear optical composition which contains a vinylidene fluoride copolymer and an additive having molecular optoelectronic activity. An auxiliary component may be added in order to overcome problems of inadequate compatibility between the vinylidene fluoride copolymer and the additive. This auxiliary component may be polymethyl methacrylate. The composition is poled to develop the non-linear property, for instance by stretching to enhance molecular orientation. The compositions are used for waveguide applications and no indication of any other application is given.

The object of the invention is to provide an improved phase compensating sheet that is of polymeric material that is convenient to make and use as a component of a liquid crystal display device.

A liquid crystal display device according to the invention comprises in sequence a polarising plate, a liquid crystal cell, an optical phase compensating sheet and an analyzer, characterised in that the optical phase compensating sheet is composed of a polymer blend of polyvinylidene fluoride and polymethyl methacrylate containing 30 to 85% by weight of polyvinylidene fluoride, wherein polar groups in the polymer blend are oriented in a predetermined direction to provide phase compensating properties to the sheet.

The optical phase compensating sheet can be a 1/4 wavelength or a wavelength optical phase sheet.

The sheet can be made by forming the polymer blend into a sheet and orienting the polar groups in the blend in a predetermined direction. The device may subsequently be made by arranging in sequence and by arranging in sequence a polarising plate a liquid crystal cell, the optical phase compensating sheet and an analyser.

In the drawings
Figure 1 illustrates the structure of a liquid crystal element;
Fig. 2 illustrates the basic principle of the plastic optical phase compensating sheet of the present invention;
Fig. 3 illustrates the relationship between the ratio of the constituent polymers in the polyvinylidene fluoride/polymethyl methacrylate blend and the light transmission;
Fig. 4 illustrates the relationship between the ratio of the constituent polymers in the polyvinylidene fluoride/polymethyl methacrylate polymer blend and the elongation;
Figs. 5-(A) and 5-(B) illustrate the relationship between the rotation angle of the analyser and the intensity of transmitted light;
Fig. 6 illustrates the relationship between the retardation and the contrast ratio of the liquid crystal in phase sheets (films) obtained in the examples; and
Figs. 7 and 8 are chromaticity diagrams obtained in the state shown in Fig. 6.

Polyvinylidene fluoride (PVDF) is represented by the following structural formula: 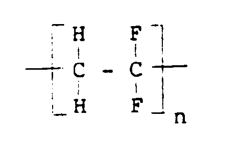
and since PVDF has C-F bonds, PVDF has a large dipole element.

PVDF is divided into an α-type crystal and a β-type crystal. In the α-type crystal, the directions of orientation of polar groups constituting the unit lattice are reversed, and thus these polar groups cancel each other and the unit lattice has no polarity.

On the other hand, in the β-type crystal, all of the polar groups constituting the unit lattice are oriented in a predetermined direction, and therefore, a polar crystal having a high dielectric constant is constructed.

The orientation of the polar groups in the blend (i.e., the conversion of the α-type crystal to the β-type crystal) can be by polarisation orientation by a direct current electric field by applying a strong electric field at a temperature higher than the glass transition temperature, or by drawing the sheet monoaxially or biaxially.

The light transmission of an optical element must be high, but the light transmission of PVDF is as low as 12% and thus PVDF cannot be used as an optical material.

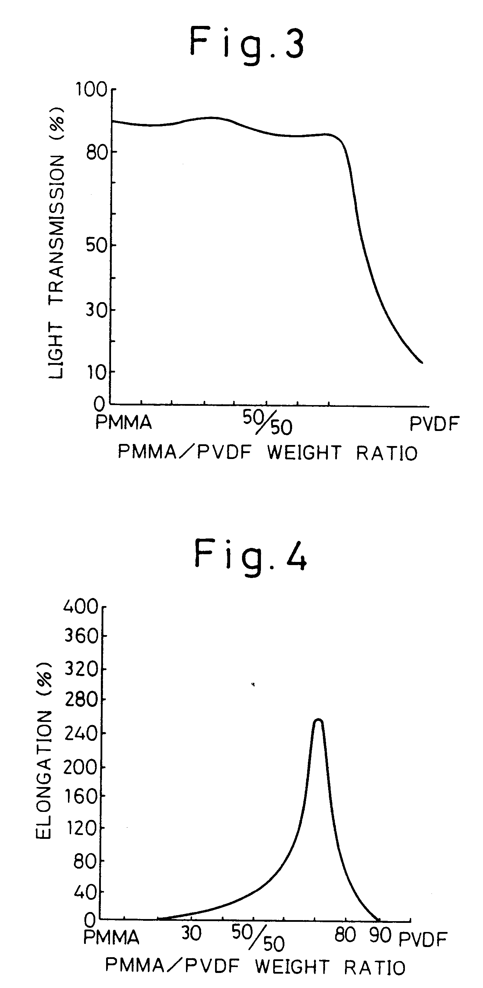

Figure 3 illustrates the relationship between the ratio (mixing weight ratio of polymethyl methacrylate (PMMA) and PVDF) and the light transmission. Although the light transmission of PVDF alone is only about 12% as pointed out above, the light transmission abruptly increases with increase of the amount of PMMA added, and if the PMMA/PVDF weight ratio exceeds 20/80, the light transmission becomes higher than 50%. Accordingly, when fabricating a plastic optical phase compensating plate, the proportion of PVDF must be as high as possible, to obtain a high light transmission. From this viewpoint, preferably the content of PVDF is up to 80 to 85%.

Figure 4 illustrates the relationship between the PMMA/PVDF ratio and the heat deflection temperature and elongation. Since the plastic optical phase sheet can be formed by monoaxially drawing the sheet so that polar groups in the solid solution of PVDF and PMMA are oriented in a predetermined direction, preferably the starting solid solution has a rich drawability. As apparent from Fig. 4, a mixture of PVDF and PMMA having a PVDF content of 30 to 85% is suitable for the fabrication of an optically anisotropic phase plate composed of a PVDF/PMMA solid solution by the monoaxial or biaxial drawing method. A highest elongation is obtained when the proportion of PVDF is about 70%, but since the elongation is extremely good, a problem of the formation of roller traces arises.

When Figs. 3 and 4 are taken collectively into consideration, it is seen that a material having a PVDF ratio of 30 to 85%, especially about 55 to about 80%, has an excellent light transmission and drawability. If the PVDF ration is within this range, a material having a parallel luminous transmission higher than 90% can be obtained (see Fig. 3).

Figure 2 illustrates the relationship between the retardation R and the contrast in the optical phase sheet, and the present invention utilizes this principle. As apparent from Fig. 2, if the retardation R is from 550 to 650 nm, a sharp contrast is obtained. Note, the retardation R is represented by the formula R = Δn x d, in which Δn stands for the inherent birefringence and d stands for the thickness.

Note, in the present invention, the term "sheet" defines a sheet having a thickness of up to about 2 mm, and accordingly, this term also includes a film.

Practical embodiments of the plastic optical phase sheet used in the liquid crystal display device of the present invention will now be described with reference to the following examples.

### Example 1

A mixture of PVDF and PMMA at a PVDF/PMMA ratio of 70/30 was charged in a glass crucible, and to prevent an incorporation of air bubbles when melting of the sample, air in the crucible was removed by placing the crucible in a pressure-reducing apparatus. In this deaerated state, the sample was heated and became molten at 170°C, i.e., at a temperature higher by 20°C that 150°C, namely the heat deflection temperature of the mixture. A thin sheet having a thickness of 0.5 mm was formed by using this melt.

The plastic thin sheet was gripped between parallel plate electrodes and a direct current electric field of 5 KV/cm was applied at a temperature of 150°C to effect orientation and polarization with the direction of the electric field being in the direction Z. The assembly was naturally cooled to room temperature in the electric field-applied state, and the electrodes were removed, whereby a 1/4 wavelength sheet for a wavelength of 633 nm was obtained.

### Example 2

The same mixture of PVDF/PMMA of 70/30 as used in Example 1 was monoaxially drawn at a draw ratio of 4 at 150°C, i.e., the heat deflection temperature, to obtain a 1/4-wavelength sheet for a wavelength of 633 nm, having a thickness of 0.5 mm.

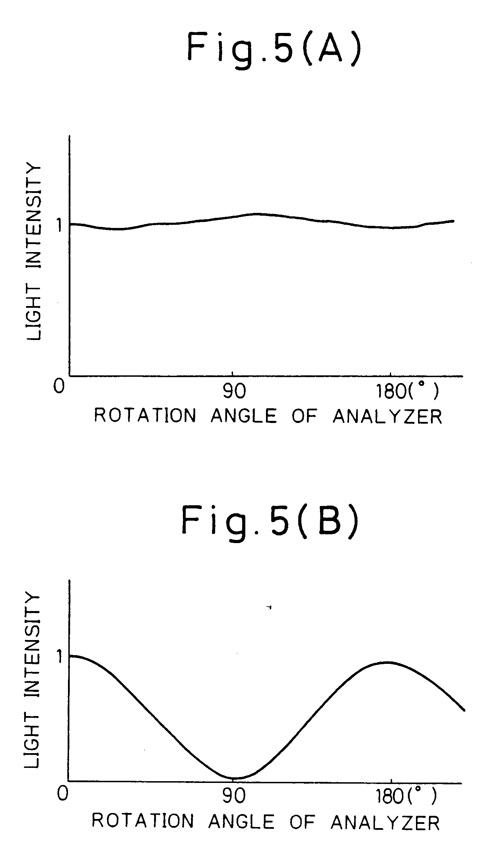

Figure 5 shows the intensities of transmitted lights at various rotation angles of an analyzer in the 1/4-wavelength sheets for a wavelength of 633 nm, prepared according to the above-mentioned two methods.

More specifically, Fig. 5-(A) shows the result obtained when a linear polarized light having a wavelength of 633 nm was made incident. As can be seen, a high-quality circular polarized light was obtained.

Figure 5-(B) shows the result obtained when the polarizing element was removed and a circular polarized light was made incident. As can be seen, the circularly polarized light was converted to a linearly polarized light.

### Example 3

A mixture comprising PVDF and PMMA at a PVDF/PMMA ratio of 70/30 was charged in a glass crucible, and to prevent an incorporation of air bubbles when melting of the sample, air in the crucible was removed by placing the crucible in a pressure-reducing apparatus. In this deaerated state, the mixture was monoaxially drawn at a draw ratio of 1.2 at 100°C, i.e., the heat deflection temperature of the mixture, to obtain an optical phase sheet having a thickness of 150 »m and a retardation R of 600 nm.

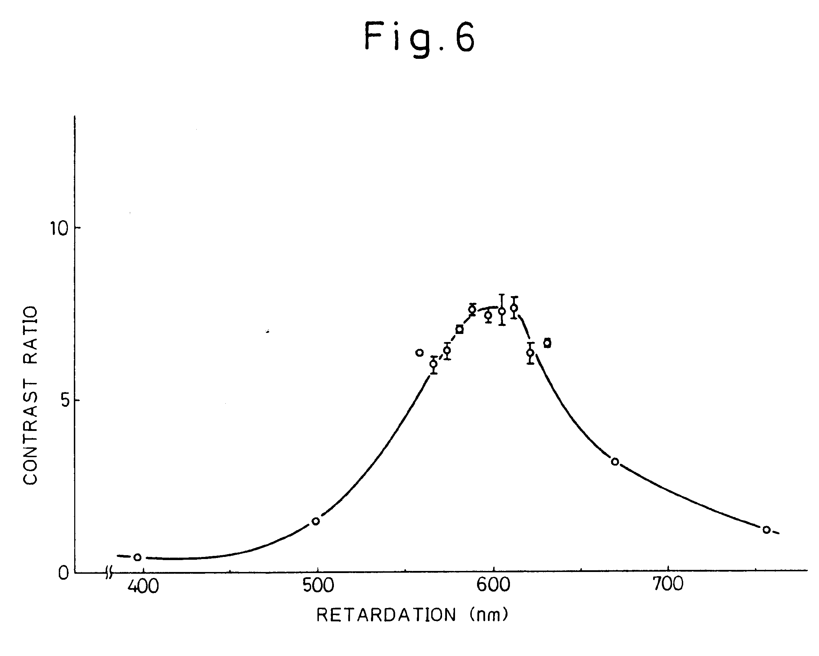

Figure 6 shows the relationship between the retardation of the optical phase sheet (compensating film) prepared according to the above-mentioned method and the contrast ratio of the liquid crystal [the brightness ratio between the ON state (white) and the OFF state (Black)]. As can be seen, a good contrast ratio was obtained when the retardation R was from 550 to 650 nm. Note, the retardation was measured by changing the birefringence Δn while keeping the film thickness d constant. The inherent birefringence Δn value is related to the drawing of the film.

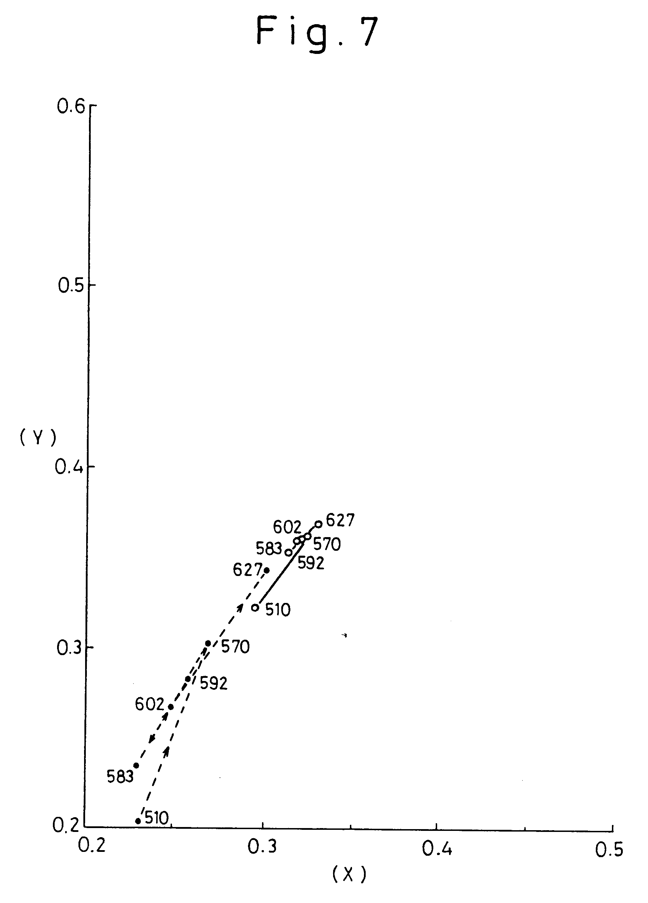

Figure 7 is a chromaticity diagram according to the stipulation of CIE (Commission Internationale de l'Eclairage). In Fig. 7, a white circle indicates the color in the ON state and a black circle indicates the color in the OFF state. Each of the values shown adjacent to the white and black circles indicates the retardation R, and these values correspond to the samples shown in Fig. 6.

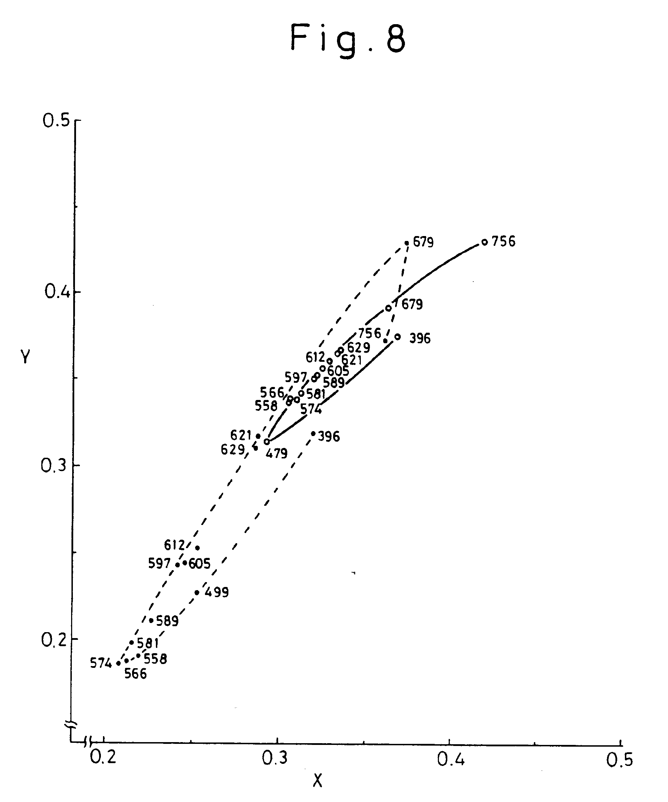

To eliminate the dispersion of the retardation due to the uneven film thickness, the retardation was actually measured at each measurement point and the chromaticity at each measurement point was measured. The obtained values were averaged to obtain a chromaticity diagram shown in Fig. 8.

From these figures, it is seen that, if the retardation is from 550 to 650 nm, white and black can be clearly discriminated from each other.

To further improve the color contrast of the optical phase sheet of the present invention, an organic fluorescent dye (for example, a perylene, dye or naphthalimide dye) can be incorporated in the above-mentioned solid solution.

As typical examples of the perylene or naphthalimide type organic fluorescent dye, there can be mentioned perylene derivatives and naphthalimide derivatives represented by the following formulae: 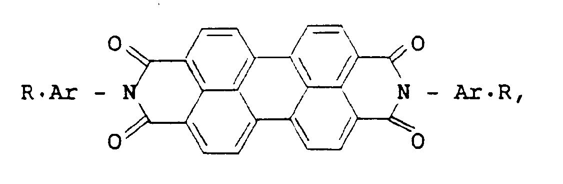 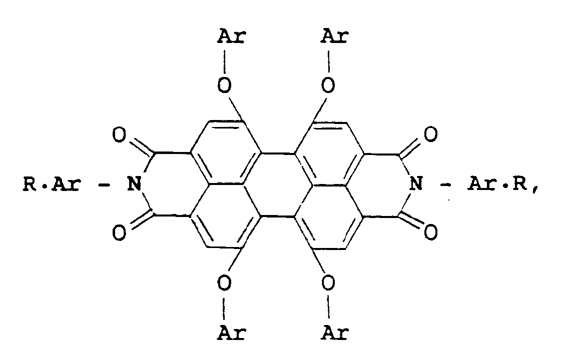 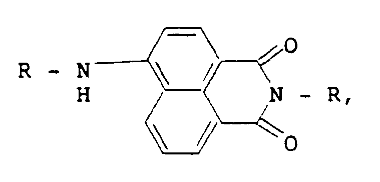
and 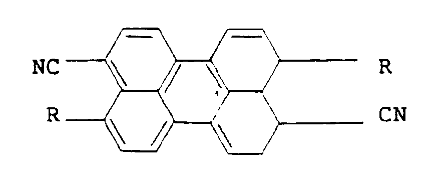
wherein Ar stands for an aryl group and R stands for an atomic group such as an alkyl group.

The sheet obtained in Example 3 was gripped between a polarizing plate (supplied by Sanritsu Denki) and a glass sheet and was bonded by using an acrylic adhesive having a heat resistance temperature of about 90°C. The bubbling test for evaluating the heat resistance was carried out at 70°C under a load of 5 kg/cm² for 30 minutes, and at 80°C under the same load for 3 hours. For comparison, monoaxially drawn polycarbonatte films having a thickness of 100 or 60 »m were similarly tested.

No bubbling was found in the film composed of the PVDF/PMMA solid solution according to the present invention, but in each of the polycarbonate films, bubbles having a diameter of 2 to 3 mm were formed between the polarizing plate and the film at an area ratio of about 10% based on the entire area. The liquid crystal display device comprising the plastic optical phase compensating sheet formed by the method of the present invention has a performance comparable to the performance of the optical phase sheet formed by using an inorganic optical crystal such as KDP or LiNbO₃ , and therefore, an optical phase plate having a larger area can be manufactured at a low cost.

Furthermore, by adopting the above-mentioned structure, an optical phase compensating sheet having a transparency, evenness of the distribution of the birefringence, contrast, and display quality superior to those of the conventional optical phase compensating sheet, such as a polycarbonate film, can be mass-produced at a low cost.

In particular, the optical phase compensating sheet can be constructed by one thin plastic sheet, and therefore, a thin, light-weight, broad-area optical phase compensating sheet can be realized and this optical phase sheet is very suitable as an optical compensating film in a liquid display device.

## Claims

1. A liquid crystal display device comprising in sequence a polarising plate (1), a liquid crystal cell (2), an optical phase compensating sheet (3) and an analyzer (4), characterised in that the optical phase compensating sheet (3) is composed of a polymer blend of polyvinylidene fluoride and polymethyl methacrylate containing 30 to 85% by weight of polyvinylidene fluoride, wherein polar groups in the polymer blend are oriented in a predetermined direction to provide phase compensating properties to the sheet.

2. A device according to claim 1, wherein the content of polyvinylidene fluoride in the polymer blend is 55 to 80% by weight.

3. A device according to claim 1 or claim 2, wherein the retardation value of the optical phase compensating sheet (3) is from 550 to 650 nm.

4. A device according to any preceding claim, wherein the polymer blend is colored by a fluorescent pigment incorporated in the polymer blend.

5. A device according to any preceding claim, wherein the optical phase compensating sheet (3) is a 1/4-wavelength or a one-wavelength optical phase compensating sheet.

6. A process of manufacturing a liquid crystal display device according to any of claims 1 to 5, comprising forming a plastic optical phase compensating sheet (3) by forming a polymer blend of polyvinylidene fluoride and polymethyl methacrylate containing 30 to 85% by weight of polyvinylidene fluoride into a sheet and orienting polar groups in the polymer blend in a predetermined direction to provide phase compensating properties to the sheet, and then arranging in sequence a polarising plate (1), a liquid crystal cell (2), the optical phase compensating sheet (3) and an analyser (4).

7. A process according to claim 6, wherein the orientation is effected by a polarization orientation of the sheet by a direct current electric field.

8. A process according to claim 6 or claim 7, wherein the orientation is effected by a monoaxial or biaxial drawing of the sheet.

## Patentansprüche

1. Eine Flüssigkristallanzeigevorrichtung, die in der Reihenfolge eine Polarisationsplatte (1), eine Flüssigkristallzelle (2), ein optisches Phasenkompensationsblatt (3) und einen Analysator (4) umfaßt, dadurch gekennzeichnet, daß sich das optische Phasenkompensationsblatt (3) aus einer Polymermischung aus Polyvinylidenfluorid und Polymethylmethacrylat zusammensetzt, die 30 bis 85 Gew.-% Polyvinylidenfluorid enthält, bei der polare Gruppen in der Polymermischung in einer vorbestimmten Richtung orientiert sind, um dem Blatt Phasenkompensationseigenschaften zu verleihen.

2. Eine Vorrichtung nach Anspruch 1, bei der der Gehalt an Polyvinylidenfluorid in der Polymermischung 55 bis 80 Gew.-% beträgt.

3. Eine Vorrichtung nach Anspruch 1 oder Anspruch 2, bei der der Retardierungswert des optischen Phasenkompensationsblattes (3) zwischen 550 und 650 nm liegt.

4. Eine Vorrichtung nach irgendeinem vorhergehenden Anspruch, bei der die Polymermischung durch ein Fluoreszenzpigment gefärbt ist, das in der Polymermischung inkorporiert wurde.

5. Eine Vorrichtung nach irgendeinem Vorhergehenden Anspruch, bei der das optische Phasenkompensationsblatt (3) ein optisches 1/4-Wellenlängen- oder Einerwellenlängenphasenkompensationsblatt ist.

6. Ein Verfahren zum Herstellen einer Flüssigkristallanzeigevorrichtung nach irgendeinem der Ansprüche 1 bis 5, mit dem Bilden eines plastischen optischen Phasenkompensationsblattes (3) durch Bilden einer Polymermischung aus Polyvinylidenfluorid und Polymethylmethacrylat, die 30 bis 85 Gew.-% Polyvinylidenfluorid enthält, zu einem Blatt und Orientieren von polaren Gruppen in der Polymermischung in einer vorbestimmten Richtung, um dem Blatt Phasenkompensationseigenschaften zu verleihen, und dann dem Anordnen einer Polarisationsplatte (1), einer Flüssigkristallzelle (2), des optischen Phasenkompensationsblattes (3) und eines Analysators (4) in der Reihenfolge.

7. Ein Verfahren nach Anspruch 6, bei dem die Orientierung durch eine Polarisationsorientierung des Blattes durch ein elektrisches Gleichstromfeld bewirkt wird.

8. Ein Verfahren nach Anspruch 6 oder 7, bei dem die Orientierung durch ein monoaxiales oder biaxiales Ziehen des Blattes bewirkt wird.

## Revendications

1. Dispositif d'affichage à cristal liquide comprenant, successivement, une lame de polarisation (1), une cellule de cristal liquide (2), une feuille de compensation de phase optique (3) et un analyseur (4), caractérisé en ce que la feuille de compensation de phase optique (3) est composée d'un mélange de polymères formé de poly(fluorure de vinylidène) et de poly(méthacrylate de méthyle) qui contient de 30 à 85 % en poids de poly(fluorure de vinylidène), où les groupes polaires du mélange de polymères sont orientés suivant une direction prédéterminée afin de conférer des propriétés de compensation de phase à la feuille.

2. Dispositif selon la revendication 1, où la teneur en poly(fluorure de vinylidène) du mélange de polymères est de 55 à 80 % en poids.

3. Dispositif selon la revendication 1 ou 2, où la valeur de retard de la feuille de compensation de phase optique (3) est de 550 à 650 nm.

4. Dispositif selon l'une quelconque des revendications précédentes, où le mélange de polymères est coloré par un pigment fluorescent incorporé dans le mélange de polymères.

5. Dispositif selon l'une quelconque des revendications précédentes, où la feuille de compensation de phase optique (3) est une feuille de compensation de phase optique d'un quart de longueur d'onde ou d'une longueur d'onde.

6. Procédé de fabrication d'un dispositif d'affichage à cristal liquide de l'une quelconque des revendications 1 à 5, qui consiste à former une feuille de compensation de phase optique (3) en matière plastique en formant un mélange de polymères, comprenant du poly(fluorure de vinylidène) et du poly(méthacrylate de méthyle) et contenant de 30 à 85 % en poids de poly(fluorure de vinylidène), en une feuille, et orienter les groupes polaires dans le mélange de polymère suivant une direction prédéterminée afin de conférer à la feuille des propriétés de compensation de phase, puis à disposer successivement une lame de polarisation (1), une cellule de cristal liquide (2), la feuille de compensation de phase optique (3) et un analyseur (4).

7. Procédé selon la revendication 6, où on effectue l'orientation en orientant la polarisation de la feuille à l'aide d'un champ électrique continu.

8. Procédé selon la revendication 6 ou 7, où on effectue l'orientation en étirant la feuille de façon monoaxiale ou biaxiale.
